# EUROPEAN PATENT APPLICATION

(11) **EP 1 462 655 A1**
(43) Date of publication of application: **29.09.2004**
(21) Application number: 02783747.5
(22) Date of filing: 03.12.2002
(51) Int. Cl.: F04C 18/02, H01M 8/04, H01M 8/10

(54) **POWER GENERATING DEVICE**

(30) Priority: 03.12.2001 JP 2001368289; 15.07.2002 JP 2002205089
(71) Applicant: Matsushita Ecology Systems Co., Ltd., Kasugai, Aichi 486-8522 (JP)
(72) Inventor: OKAYAMA, Toyoji, Kasugai-shi, Aichi 486-0811 (JP); OGINO, Kazuo, Kasugai-shi, Aichi 480-0304 (JP); KATO, Tsutomu, Kasugai-shi, Aichi 486-0845 (JP); TANIGUCHI, Kazuhiro, Komaki-shi, Aichi 485-0831 (JP)
(74) Representative: Körfer, Thomas, Dipl.-Phys.
(86) International application number: PCT/JP2002/012660
(87) International publication number: WO 2003/048583

(57) **Abstract**

In a scroll compressor, a revolution scroll lap 1a stands on one of surfaces of a revolution lap support disk 1b of a revolution scroll member 1, and a revolution disk 2 is connected to the other surface. The revolution disk 2 is formed at its center with a revolution shaft support hole 2b into which an eccentric shaft 4a is to be inserted. An outer periphery of the revolution shaft support hole 2b is formed with a crankshaft support hole 2a into which an eccentric shaft 5e is to be inserted. The eccentric shaft 5e restrains the rotation of the revolution scroll member 1. The revolution scroll lap 1a and the revolution lap support disk 1b are integrally formed of synthetic resin. The revolution disk 2 is made of metal. The revolution shaft support hole 2b and the crankshaft support hole 2a are integrally formed together. With this configuration, the thermal deformation of revolution scroll member 1 is suppressed, and wear and mechanical loss caused by contact between laps are prevented.

## Description

### Technical Field

The present invention relates to an electric power generator utilizing a scroll compressor as an air compressor.

### Background Technique

A turbo-air compressor and a swirl air compressor are used as air compressors which supply air and which are utilized in polyelectrolyte fuel cells which are electric power generators. A turbo-air compressor is an air compressor in which a turbofan is rotated at high speed to increase the pressure by a centrifugal force. The turbo-air compressor is incorporated in a home vacuum cleaner, and the turbo-air compressor is normally rotated at high speed of 15,000 to 25,000 rpm. Thus, there is a problem that lifetime of the turbo-air compressor is as short as 5,000 hours, and its noise is also high. A swirl air compressor is an air compressor in which a rotation disk having a large number of radial grooves along its outer periphery causes turbulent flow and shearing effect to increase the pressure. Although high pressure can be generated as compared with circumferential speed, there is a problem that power consumption is high, operation efficiency is low and noise is high.

A home polyelectrolyte fuel cell generally has output of 1KW to 1.5KW, and an electricity loss of an accessory machine such as an air compressor or an inverter is about 200W. An electricity loss of the air compressor is about 100W. The greatest object for the polyelectrolyte fuel cell is to reduce an electricity loss of an accessory machine. A home polyelectrolyte fuel cell is usually used during the full year, and its lifetime should be at least ten years on an economically viable basis. Ideally, lifetime of 80,000 hours or more is preferable, but under present technical circumstances, lifetime of 40, 000 hours or more is required. That is, as an air compressor which is utilized for a polyelectrolyte fuel cell and which supplies air, there is desired an air compressor in which it is possible to control optimal static pressure, wind amount and the like which are proportional to generated electricity, the electricity loss is small, a blade is rotated at low speed to elongate the lifetime, and the noise is low.

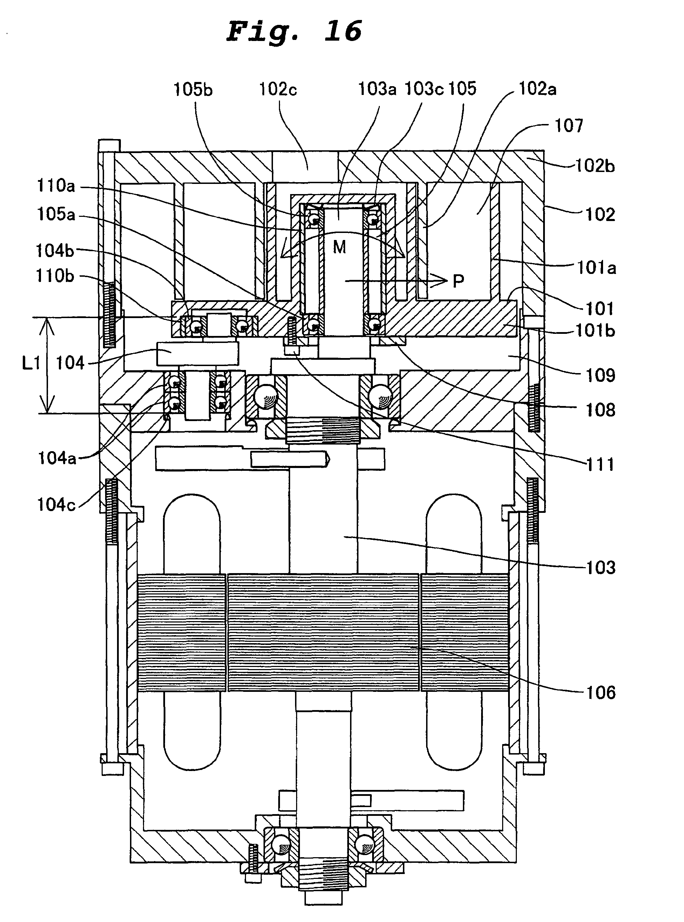

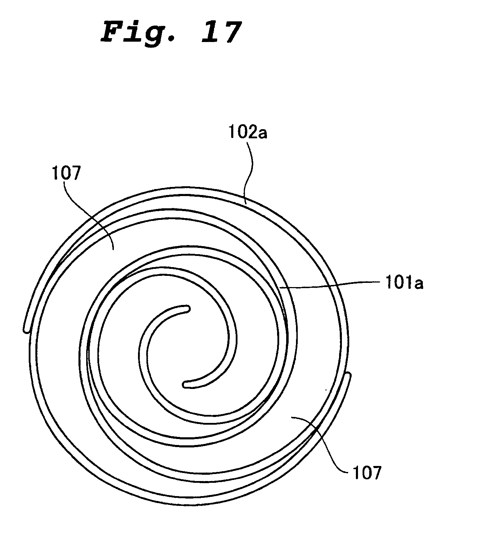

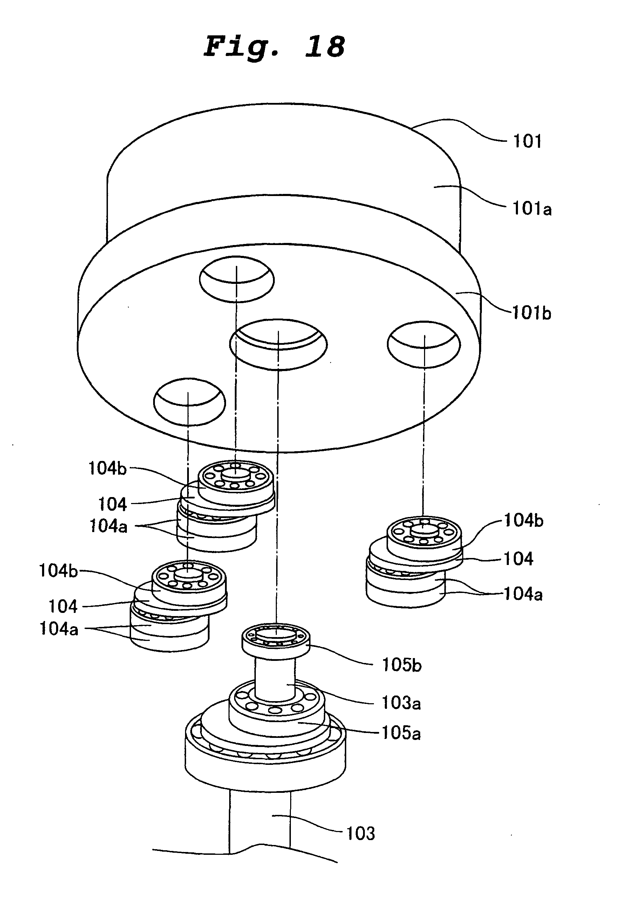

A scroll compressor which can be used as the air compressor will be explained with reference to Figs. 16 to 18. Fig. 16 is a sectional view showing a conventional air compressor. Fig. 17 shows a scroll-meshing state of the air compressor shown in Fig. 16. Fig. 18 is a bird's eye view showing a bearing structure of the air compressor shown in Fig. 16.

In a scroll compressor as an air compressor shown in Fig. 16, a revolution scroll member 101 of a revolution scroll member 101 stands on one surface of a revolution lap support disk 101b, and a fixed scroll lap 102a of a fixed scroll member 102 stands on one surface of a fixed lap support disk 102b. The fixed lap support disk 102b is provided at its center with a discharge port 102c for discharging compressed gas. The revolution lap support disk 101b is provided at its center with a revolution shaft support hole 105 into which an eccentric shaft 103a of a drive shaft 103 is inserted. The drive shaft 103 provided at its one end with the eccentric shaft eccentric shaft 103a. The other end of the drive shaft 103 is connected to a rotor of a drive motor 106.

The eccentric shaft 103a of the drive shaft 103 is rotatably provided in a revolution shaft support hole 105 through two single row deep groove bearings 105a and 105b. To reduce a gap of the single row deep groove bearing 105b in its radial direction, a pre-load is applied to an outer ring of the single row deep groove bearing 105b in its thrust direction at the bellevile spring 103c. The outer ring of the single row deep groove bearing 105a is fixed to the revolution lap support disk 101b through a cap ring 108 and a bolt 111 so that the revolution shaft support hole 105 does not move in the axial direction.

The revolution lap support disk 101b is pivotally supported by a plurality of crankshafts 104 to prevent the revolution scroll member 101 from rotating. One single row deep groove bearing 104b is fitted over a shaft of the crankshaft 104 closer to the revolution scroll member 101, and the crankshaft 104 is pivotally supported by the revolution scroll member 101 through a bearing 104b. Two single row deep groove bearings 104a are fitted over the other shaft of the crankshaft 104 opposite from the revolution scroll member 101. The crankshaft 104 is pivotally supported by a revolution support plate 109 through two single row deep groove bearings 104a. Manufacturing error of each of the crankshafts 104 in the thrust direction size L1 may generate unnecessary internal stress in the revolution lap support disk 101b. To prevent this, the crankshaft 104 is biased in the axial direction by the bellevile spring 104c.

A gas compressing chamber 107 is formed between the revolution scroll lap 101a and the fixed scroll lap 102a. As the revolution scroll member 101 revolves, the gas compressing chamber 107 is moved from the outer periphery side toward the inner periphery side in succession and with this movement, the compressing space is reduced, the compressed gas is discharged out from the discharge port 102c.

If the drive shaft 103 is rotated by the drive motor 106, the revolution scroll member 101 rotates together with the drive shaft 103, but since the revolution scroll member 101 is prevented from rotating by the crankshaft 104, the revolution scroll member 101 revolves around the drive shaft 103.

When the revolution scroll member 101 revolves, a centrifugal force P is applied to a barycenter of the revolution scroll member 101, and the centrifugal force P allows the revolution lap support disk 101b to generate a bending moment M. Since the crankshaft 104 can move in the axial direction by the bellevile spring 104c, the crankshaft 104 can not support the bending moment M. Thus, this bending moment M is received by the two single row deep groove bearings 105a and 105b provided on the eccentric shaft 103a.

From the above fact, to reduce the centrifugal force P, a light mass material such as aluminum is used for the revolution scroll member 101 in many cases. In this case, wear resistances of fitting surfaces of the single row deep groove bearings 105a and 105b fitted over the eccentric shaft 103a, and of the outer ring of the single row deep groove bearing 104b fitted over two or more crankshafts 104 are reduced. Thus, iron ring members 110a and 110b are inserted.

In order to allow the revolution lap support disk 101b to revolve in parallel to the fixed lap support disk 102b, it is necessary to keep the drive shaft 103 and the eccentric shaft 103a in parallel to each other.

However, a lap height is usually smaller than an outer shape of the revolution lap support disk 101b, and since the bending moment M caused by the centrifugal force P of the revolution scroll member 101 is supported, a gap between the single row deep groove bearing 105a and the single row deep groove bearing 105b can not be increased. Further, since the thickness of the eccentric shaft 103a can not be increased, the revolution scroll member 101 is bent by the bending moment M, the drive shaft 103 and the eccentric shaft 103a can not be kept in parallel to each other, and this may cause a noise. Therefore, in order to reduce the bending moment M, it is important to use a light material lighter than aluminum as the revolution scroll member.

Thereupon, it is conventionally proposed to use resin for the scroll member (e.g., Japanese Patent Applications Laid-open No.S63-85278, No.S62-199981, No.S61-38187, No.H5-106402 and No.S59-79090). Among them, Japanese Patent Applications Laid-open No.S61-38187 discloses a scroll compressor. This compressor comprises a fixed scroll mainly made of synthetic resin, a turning blade, a turning scroll whose mirror plate and a portion receiving the eccentric rotation are made of synthetic resin, and a reinforcing material made of wear resistant material. This reinforcing material is integrally connected to a back surface opposite from a surface on which the turning blade of the mirror plate of the turning scroll, and is also integrally connected to a receiving surface receiving the eccentric rotation. As the wear resistant material, this publication discloses metal such as aluminum alloy.

However, the electric power generator in which the above-described conventional scroll compressor is utilized as the air compressor has the following problems.

First, since synthetic resin is used for the revolution scroll member of the scroll compressor, if a metal part is inserted into the synthetic resin turning scroll to reinforce the receiving portion which receives the eccentric rotation, coefficients of linear expansion of the synthetic resin and the metal part are different from each other, the turning scroll is deformed by heat generated at the time of insert injection molding or change in time during use. If such a deformation is generated, the gap between the turning scroll lap and the fixed scroll lap can not be maintained at constant, lap contact is generated, and this causes nose as mechanical loss. That is, the deformation causes wear or mechanical loss due to the lap contact, and the lifetime and consumed power are adversely affected. Further, the bearing boss is made of synthetic resin, a sink is generated in the resin due to the bearing boss at the time of insert injection molding, this sink causes a recess in the inner bottom surface of the turning scroll, and there is an adverse possibility that the compressing efficiency is lowered due to the dead volume.

In a state in which the revolution scroll lap 101a and the fixed scroll lap 102a are meshed with each other, a curved gap is provided in the direction of the normal of the arc, i.e., between laps. Tip end gaps are provided between a lap tip end of the revolution scroll lap 101a and the fixed lap support disk 102b, and between a lap tip end of the fixed scroll lap 102a and the revolution lap support disk 101b. However, if the revolution scroll member made of synthetic resin is deformed, the predetermined gap can not be maintained, and the lifetime and consumed power are adversely affected. When a discharging pressure of 10Kpa or greater is required, there is a problem that gas leaks from a gap in the direction of the normal and the gap of the tip end.

If the synthetic resin is used for the revolution scroll member, there is a problem that it is deformed by drive force applied to the revolution scroll member.

Further, there is a problem that the scroll member, the casing and the like must further be reduced in weight to reduce the entire air compressor in weight.

Therefore, it is an object of the present invention to provide a payable electric power generator in which power consumption of an air compressor as an accessory machine is reduced, lifetime thereof is increased, and electricity loss is small.

It is another object of the invention in which a predetermined value capable of maintaining a gap between both the scrolls for a long time is set, power consumption of the air compressor is reduced and the lifetime thereof is increased.

It is another object of the invention to suppress the deformation of the revolution scroll member caused by driving force, to reduce the power consumption of the air compressor and to elongate the lifetime thereof.

### Disclosure of the Invention

A first aspect of the present invention provides an electric power generator using a scroll compressor as an air compressor for supplying oxygen to a fuel cell, wherein in a revolution scroll member constituting the scroll compressor, a revolution scroll lap stands on one of surfaces of a revolution lap support disk, a revolution disk is connected to the other surface of the revolution lap support disk, the revolution disk is formed at its center with a revolution shaft support hole into which an eccentric shaft on an end of a drive shaft is to be inserted, an outer periphery of the revolution shaft support hole of the revolution disk is formed with a plurality of crankshaft support holes into which eccentric shafts of crankshafts which restrain rotation of the revolution scroll member are to be inserted, the revolution lap support disk and the revolution scroll lap are integrally formed of synthetic resin, the revolution disk is made of metal, the revolution shaft support hole and the crankshaft support hole are integrally formed together.

According to this aspect, it is possible to provide a payable electric power generator in which thermal deformation of the revolution scroll member is suppressed, wear and mechanical loss caused by contact between laps are prevented, power consumption of the air compressor is reduced, its lifetime is increased, and electricity loss is small.

A second aspect of the invention provides an electric power generator using a scroll compressor as an air compressor for supplying oxygen to a fuel cell, wherein the scroll compressor comprises a fixed scroll member having a fixed scroll lap standing on one of surfaces of a fixed lap support disk, a revolution scroll member having a revolution scroll lap standing on one surface of a revolution lap support disk, a drive shaft for transmitting a driving force to the revolution scroll member, a crankshaft for restraining rotation of the revolution scroll member, and a revolution support plate for holding the drive shaft through a bearing and for holding one of eccentric shafts of the crankshaft through a bearing, the fixed scroll member and a first casing which covers an outer periphery of the fixed scroll lap are integrally formed of synthetic resin, the revolution support plate and a second casing connected to the first casing are integrally formed of metal, a revolution disk made of metal is connected to the other surface of the revolution lap support disk, the revolution disk pivotally supports an eccentric shaft on an end of the drive shaft, and pivotally supports the other eccentric shaft of the crankshaft.

According to this aspect, it is possible to provide a payable electric power generator in which thermal deformation of the revolution scroll member is suppressed, wear and mechanical loss caused by contact between laps are prevented, power consumption of the air compressor is reduced, its lifetime is increased, and electricity loss is small.

According to a third aspect of the invention, in the electric power generator of the second aspect, a plurality of ball bearings are provided on eccentric shafts on opposite ends of the crankshaft, the ball bearings are assembled such that surface pressures are previously applied between their rolling elements and races.

According to this aspect, since the revolution scroll member can endure the bending moment M while keeping rigidity, the deformation of the revolution scroll member can be suppressed, and wear of the bearing can be prevented.

According to a fourth aspect of the invention, in the electric power generator of the second or third aspect, a gap is provided between a tip end of the fixed scroll lap and the revolution lap support disk, and a gap is provided between a tip end of the revolution scroll lap and the fixed lap support disk.

According to this aspect, the fixed scroll member and the revolution scroll member are meshed with each other in a non-contact manner in which no friction loss and no wear are caused, and the power consumption can be reduced and lifetime can be increased.

According to a fifth aspect of the invention, in the electric power generator of the fourth aspect, a size of the gap is 0.03 to 0.1mm.

According to this aspect, the tip end gap between both the scroll members becomes a practical value, the non-contact manner is maintained for a long time, power consumption is reduced and lifetime can be increased.

According to a sixth aspect of the invention, in the electric power generator of the second or third aspect, a gap is provided between the fixed scroll lap and the revolution scroll lap.

According to this aspect, the fixed scroll member and the revolution scroll member are meshed with each other in a non-contact manner in which no friction loss and no wear are caused, and the power consumption can be reduced and lifetime can be increased.

According to a seventh aspect of the invention, in the electric power generator of the sixth aspect, a size of the gap is 0.05 to 0.3mm.

According to this aspect, the curve gap between both the scroll members becomes a practical value, the non-contact manner is maintained for a long time, power consumption is reduced and lifetime can be increased.

According to an eighth aspect of the invention, in the electric power generator of any one of the first to third aspects, the revolution lap support disk and the revolution disk are connected to each other by fasting a bolt from the revolution lap support disk.

According to this aspect, the driving force applied to the revolution scroll member is dispersed at the bolt portion, and deformation of the revolution scroll member caused by the driving force can be suppressed.

According to a ninth aspect of the invention, in the electric power generator of any one of the first to third aspects, the revolution lap support disk and the revolution disk are connected to each other by fasting a rivet from the revolution lap support disk.

According to this aspect, the driving force applied to the revolution scroll member is dispersed at the rivet portion, and deformation of the revolution scroll member caused by the driving force can be suppressed.

According to a tenth aspect of the invention, in the electric power generator of any one of the first to third aspects, the revolution lap support disk and the revolution disk are connected to each other by melting and deforming a portion of a projection provided on the revolution lap support disk.

According to this aspect, the driving force applied to the revolution scroll member is dispersed at the projection portion, deformation of the revolution scroll member caused by the driving force can be suppressed, dead volume is eliminated, and deterioration of the compressing efficiency can be avoided.

According to an eleventh aspect of the invention, in the electric power generator of any one of the first to third aspects, the revolution lap support disk and the revolution disk are connected to each other by embedding a synthetic resin into holes formed in the revolution lap support disk and the revolution disk and by melting and deforming the synthetic resin.

According to this aspect, deformation is prevented by the synthetic resin embedded in the hole and by the dispersion of the driving force, and the compression efficiency is prevented from being deteriorated because the dead volume is eliminated.

According to a twelfth aspect of the invention, in the electric power generator of any one of the first to third aspects, the revolution scroll member or the fixed scroll member is formed by injection molding.

According to this aspect, the revolution scroll member or the fixed scroll member can be formed by injection molding.

### Brief Description of the Drawings

Fig. 1 is a block diagram showing an electric power generator of the present invention;
Fig. 2 is a sectional view showing an air compressor of an embodiment of the invention;
Fig. 3 is a sectional view showing an air compressor of another embodiment of the invention;
Fig. 4 shows meshing states of scrolls of the air compressor shown in Fig. 3;
Fig. 5 is a sectional view showing a bearing structure which pivotally supports a crankshaft of the air compressor shown in Fig. 3;
Fig. 6 shows a relation between a scroll curve gap and its efficiency of an embodiment of the invention;
Fig. 7 shows the relation between the scroll tip end gap and its efficiency of the embodiment of the invention;
Fig. 8 is a sectional view showing a fastening state between a revolution scroll member and a revolution disk of another embodiment of the invention;
Fig. 9 is a plan view of the fastening structure shown in Fig. 8;
Fig. 10 is a sectional view showing a fastening state between a revolution scroll member and a revolution disk of another embodiment of the invention;
Fig. 11 is a sectional view showing an injection molding structure of an embodiment of the invention;
Fig. 12 is a sectional view showing the injection molding structure of the embodiment of the invention;
Fig. 13 is a plan view showing a product after it is taken out from the mold shown in Fig. 12;
Fig. 14 is a sectional view showing a taking out structure of another embodiment of the invention;
Fig. 15 is a plan view showing a product after it is taken out from the mold shown in Fig. 14;
Fig. 16 is a sectional view showing a conventional air compressor;
Fig. 17 shows a scroll-meshing state of the air compressor shown in Fig. 11; and
Fig. 18 is a bird's eye view showing a bearing structure of the air compressor shown in Fig. 11.

### Best Mode for Carrying Out the Invention

### (Embodiment 1)

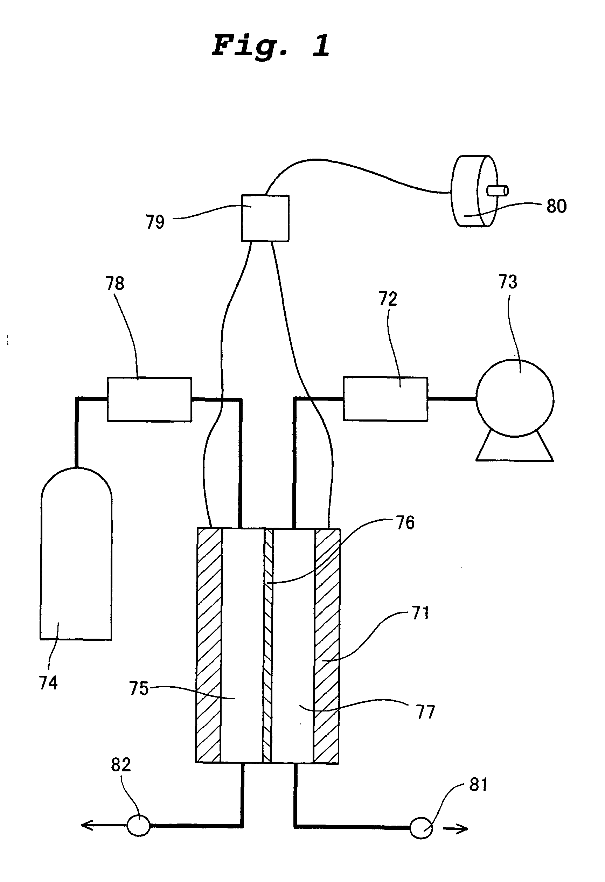

An electric power generator according to an embodiment of the present invention will be explained with reference to the drawings. Fig. 1 is a block diagram of the electric power generator of the invention.

A structure of the electric power generator using a polyelectrolyte fuel cell according to this embodiment is as follows. That is, a fuel cell 71 comprises a fuel pole 75, an electrolytic film 76 and an air pole 77. Air is pressurized by an air compressor 73 and is humidified by an air humidifier 72, and is supplied to an air pole 77. Hydrogen is adjusted in pressure at a pressure governor valve (not shown) from a hydrogen bomb 74, humidified by a hydrogen humidifier 78, and supplied to a fuel pole 75. According to the above structure, in the fuel cell 71, hydrogen supplied to the fuel pole 75 becomes hydrogen ion, the hydrogen ion passes through the electrolytic film 76 and is moved to the air pole 77. In the air pole 77, the transmitted hydrogen ion and oxygen in the supplied air react with each other and they become water. During the process of this reaction, electricity is generated, direct electricity is converted into alternating electricity by an inverter 79, and is supplied to a load 80. Air which was not reacted in the air pole 77 is discharged from an air outlet 81 together with water (vapor) generated by the reaction. Hydrogen which was not reacted in the fuel pole 75 is discharged out from the hydrogen outlet 82.

### (Embodiment 2)

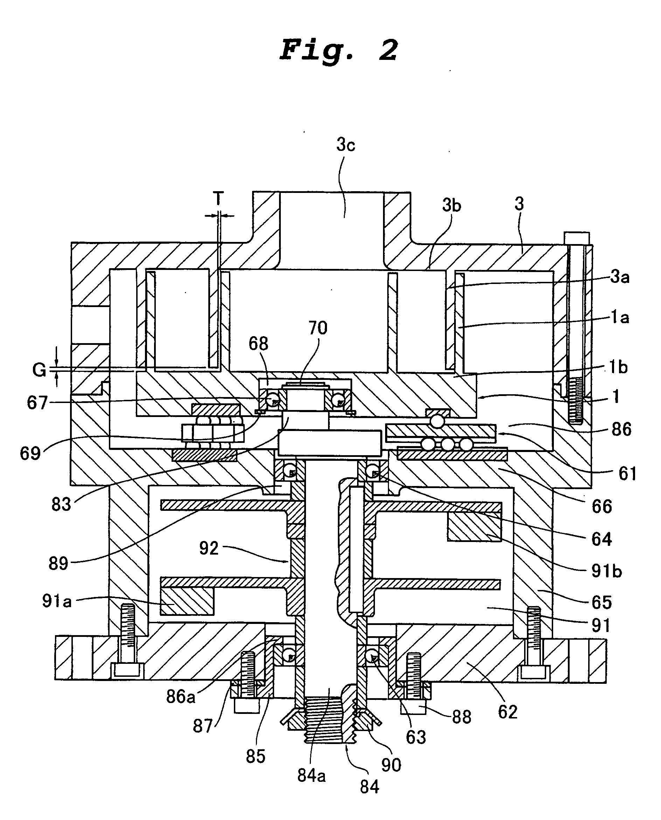

An air compressor of an embodiment used in the electric power generator of the invention will be explained next. Fig. 2 is a sectional view showing the air compressor of the embodiment of the invention. A drive motor for driving a compressing mechanism is not illustrated in the drawing.

A scroll compressor as an air compressor shown in Fig. 2 includes a revolution scroll member 1 and a fixed scroll member 3. According to the revolution scroll member 1, a revolution scroll lap 1a stands on a revolution lap support disk 1b having a revolution shaft support hole 68. A drive shaft 84 includes a main shaft 84a provided at its end with an eccentric shaft 83. The eccentric shaft 83 is eccentric from the main shaft 84a. A ball bearing 67 is fitted over the eccentric shaft 83. The revolution scroll member 1 is pivotally supported by the drive shaft 84 through the ball bearing 67.

The eccentric shaft 83 is provided with a shaft C shaped detent ring 70 so that the eccentric shaft 83 does not fall out from the ball bearing 67. The revolution shaft support hole 68 is provided with a hole C shaped detent ring 69 so that the ball bearing 67 does not fall out from the revolution shaft support hole 68. Therefore, the eccentric shaft 83 does not fall in the axial direction of the revolution scroll member 1 by the shaft C shaped detent ring 70 and the hole C shaped detent ring 69. A fixed scroll lap 3a standing on one surface of the fixed scroll member 3 meshes with the revolution scroll lap 1a.

At that time, a predetermined fine gap G is provided between each of swirl end surfaces of the scroll laps and an opposed flat surface. A fine gap T is also provided between in involute curve of the fixed scroll lap 3a and an involute curve of the revolution scroll lap 1a. A body frame 65 is fitted over an upper portion of a disk-like base 62. The body frame 65 has a partition portion 66, and a balancer chamber 91 is formed closer to the base 62 and a scroll chamber 86 is formed on the opposite side from the balancer chamber 91. A ball bearing 64, a first balancer 91a, a second balancer 91b and a ball bearing 63 are positioned by a drive shaft set 92 through collar rings. The ball bearing 64, the first balancer 91a and a second balancer 91b are mounted to the drive shaft 84 of the drive shaft set 92. The drive shaft set 92 is fixed using a bearing nut 90 so that the drive shaft set 92 does not move in an axial direction of the drive shaft 84.

The partition portion 66 is provided at its center with a cylindrical hole. A diameter of the cylindrical hole is equal to an outer diameter of the ball bearing 64. The ball bearing 64 is disposed in the cylindrical hole of the partition portion 66. The ball bearing 64 can move in the axial direction in the cylindrical hole of the partition portion 66.

The base 62 is provided at its center with a cylindrical hole, and a cylindrical bearing housing 85 is disposed in this cylindrical hole. The bearing housing 85 sandwiches a spacer 87 between itself and the base 62, and is fixed by a bolt 88. The bearing housing 85 includes a step 86a. A ball bearing 64 is disposed in the bearing housing 85. The ball bearing 63 is positioned in the bearing housing 85 by the step 86a.

If the drive shaft 84 is rotated, the eccentric shaft 83 revolves, and the revolution scroll member 1 tries to rotate around the eccentric shaft 83. A rotation-preventing device 61 allows the revolution scroll member 1 between the body frame 65 and the revolution lap support disk 1b to revolve. The revolution scroll member 1 is prevented from rotating by the rotation-preventing device 61, and the revolution scroll member 1 revolves. The revolution scroll lap 1a of the revolution scroll member 1 and the fixed scroll lap 3a of the fixed scroll member 3 form a compressing chamber.

If a compression pre-load is applied to the rotation-preventing device 61, revolution rigidity of a revolution member can be enhanced, and vibration of the fine gap G of the scroll lap can be reduced. To apply the pre-load, a thickness of a spacer 87 between the bearing housing 85 and the base 62 is adjusted, the bolt 88 is fastened, thereby slipping the outer ring of the ball bearing 64 of the partition portion 66 in the axial direction, and the drive shaft set 92 is allowed to move toward the base 62. If the pre-load is applied to the rotation-preventing device 61, the revolution scroll member 1 can revolve while maintaining the lap tip end gap G.

Since the ball bearing 64 rotates around its axis, a fitting tolerance of the outer ring is a gap fitting, and the moving in the axial direction is light. The fitting tolerance between the bearing housing 85 and the base 62 is a gap fitting, and the moving force in the axial direction also becomes minimum. Thus, it is possible to finely adjust the pre-load when it is applied, and it is possible to obtain a scroll compressor capable of reducing the friction loss while maintaining the movement rigidity of the rotation-preventing device. If this is utilized for an air compressor of a polyelectrolyte fuel cell, the power consumption is reduced.

The pressure of a scroll air compressor is proportional to the number of windings of the scroll and is inversely proportional to the fine gap G and the fine gap T. The height and rotation number of the scroll lap are proportional to the volume of air. These values are optimally selected while taking the pressure and the volume of air of the required polyelectrolyte fuel cell.

For example, if the volume of air is 0.1m³/minute and the pressure is 3,00Pa, this can be achieved by setting the lap tip end gap to 0.05mm, the lap curve gap to 0.2mm, the lap height to 50mm, and the number of rotations to 1,200rpm. Since the volume of air is proportional to the number of rotations, it is preferable to use, as a driving source, a DC motor whose number of rotations can easily be controlled. In order to most reduce the cost and power consumption required during manufacturing and assembling the fixed scroll parts and the revolution scroll parts, it is most preferable to set the lap tip end gap to 0.03 to 0.1mm, and the lap curve gap to 0.05 to 0.3mm. If the gap exceeds these values, wind leakage is caused, and necessary pressure and volume of air can not be obtained.

If the fixed scroll and the revolution scroll are made of resin such as ABS, PP, PS or the like by injection molding, they can inexpensively be produced in large quantity, and they are lighter than metal in weight, vibration caused by revolution unbalance force can be reduced, and the noise is reduced. As the resin material, any of thermoplastic resin and thermosetting resin may be used.

### (Embodiment 3)

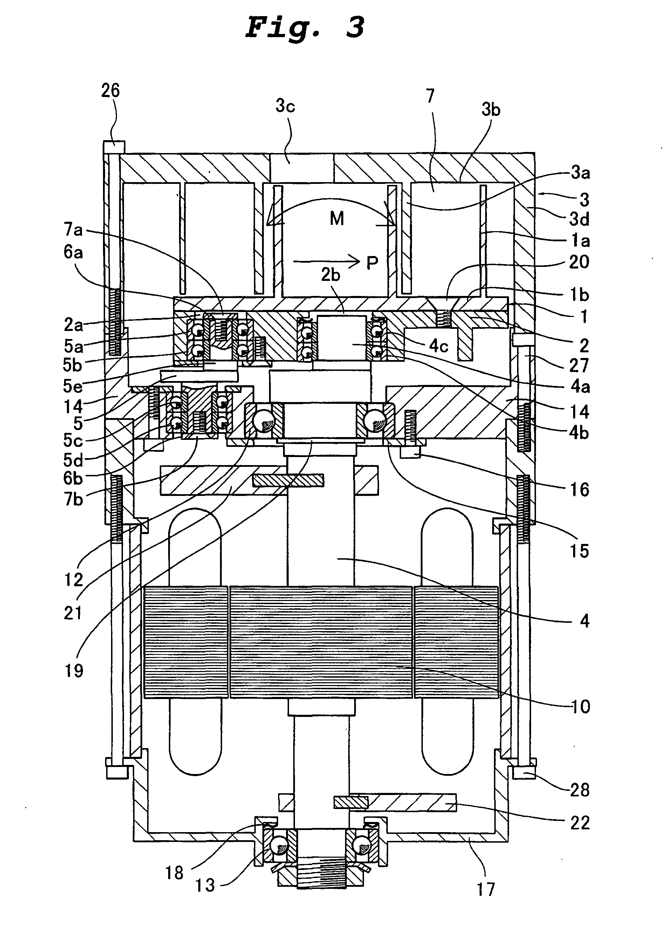

An air compressor according to another embodiment used for the electric power generator of the invention will be explained next with reference to the drawings. Fig. 3 is a sectional view showing the air compressor of the other embodiment of the invention.

A scroll compressor as the air compressor shown in Fig. 3 comprises a compressing mechanism, a scroll drive section and an assembling bolt. The compressing mechanism comprises a revolution scroll member 1 which engages with a revolution disk 2, and a fixed scroll member 3. The scroll drive section comprises a revolution support plate 14, a drive motor 10 having a drive shaft 4 which is to be inserted into the revolution support plate 14, and a balance protection cover 17 for protecting the drive motor 10 and a balancer weight 22. Detailed structure will be explained.

A revolution scroll lap 1a stands on one of surfaces of a revolution lap support disk 1b of a revolution scroll member 1. The revolution lap support disk 1b and the revolution scroll lap 1a are integrally formed together using synthetic resin. A fixed scroll lap 3a stands on one of surfaces of a fixed lap support disk 3b of a fixed scroll member 3. The fixed scroll member 3 is integrally formed with a first casing 3d using synthetic resin. The first casing 3d covers an outer periphery of the fixed scroll lap 3a. The revolution scroll member 1 and the fixed scroll member 3 are arranged to be opposed to each other, the revolution scroll lap 1a and the fixed scroll lap 3a mesh with each other while leaving a predetermined gap therebetween, thereby forming a gas compressing chamber 7.

The revolution disk 2 is fastened to the other surface of the revolution lap support disk 1b through a plurality of bolts 20. The revolution disk 2 is provided at its center with a revolution shaft support hole 2b into which an eccentric shaft 4a on an end of the drive shaft 4 is to be inserted. That is, the eccentric shaft 4a of the drive shaft 4 transmits a driving force of the drive motor 10 to the revolution scroll member 1. An outer periphery of the revolution shaft support hole 2b of the revolution disk 2 is provided with a plurality of crankshaft support holes 2a into which a plurality of eccentric shafts 5e of the crankshafts 5 are to be inserted The crankshafts 5 prevent the revolution scroll member 1 from rotating. The revolution disk 2 is made of metal, and the metal revolution disk 2 is integrally provided with the revolution shaft support hole 2b and the crankshaft support hole 2a.

The revolution support plate 14 holds the drive shaft 4 through a single row deep groove bearing 12, and holds the eccentric shaft 5f of the crankshaft 5 through single row deep groove bearings 5c and 5d. A second casing 14d is connected to a first casing 3d through a bolt 26. The revolution support plate 14 and the second casing 14d are integrally formed of metal. The revolution disk 2 pivotally supports the eccentric shaft 4a on the end of the drive shaft 4, and pivotally supports the other eccentric shaft 5e of the crankshaft 5.

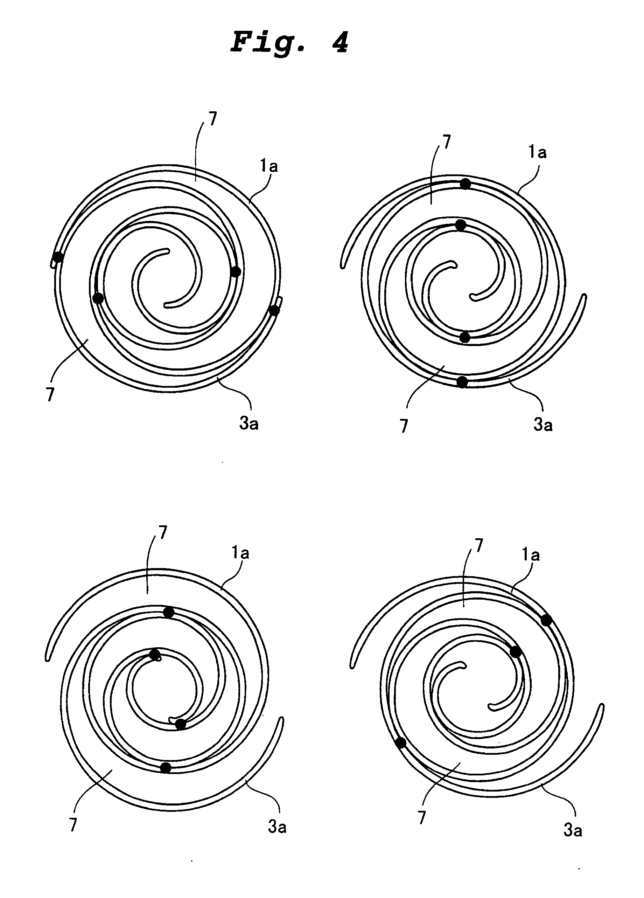

Next, the compressing process of the scroll will be explained. Fig. 4 shows meshing states of scrolls of the air compressor shown in Fig. 3. Figs. 4 shows states in which a volume of the gas compressing chamber 7 is gradually reduced, and in which drawn air is compressed. If the revolution scroll lap 1a shown in Fig. 4 is revolved in the clockwise direction, the gas compressing chambers 7 move from outside to inside in succession, gas is compressed, and the gas is discharged from a discharge port 3c of the fixed lap support disk 2b shown in Fig. 3.

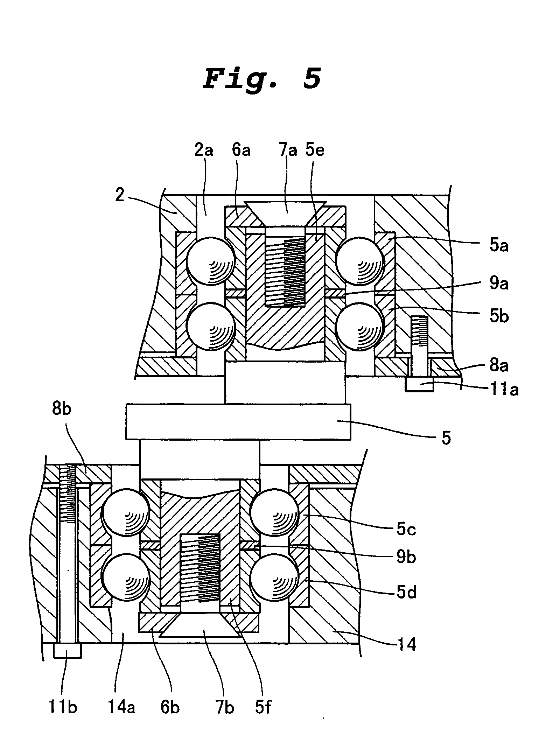

The rigidity enhancement of the revolution scroll member will be explained with reference to Figs. 3 and 5. Fig. 5 is a sectional view showing a bearing structure which pivotally supports the crankshaft of the air compressor shown in Fig. 3. Two single row deep groove bearings 5a and 5b are fitted over the eccentric shaft 5e of the crankshaft 5 shown in Fig. 5 on the side of the revolution disk 2. Two single row deep groove bearings 5c and 5d are fitted over the eccentric shaft 5f opposite from the eccentric shaft 5e. An angular contact bearing or a conical bearing may be used instead of the single row deep groove bearing.

The single row deep groove bearings 5a and 5b are fitted into the crankshaft support hole 2a of the revolution disk 2 made of aluminum, iron alloy or titanium alloy. Thus, the wear resistance is enhanced and the revolution scroll member 1 can be reduced in weight due to resin as compared with a case in which the outer rings of the fitted single row deep groove bearings 5a and 5b come into contact with the metal surface of the revolution disk 2 and fitted into the hole formed in the synthetic resin revolution scroll member 1. Thus, the centrifugal force P applied to the barycenter of the revolution scroll member 1 is reduced, and since the barycenter position is close to the revolution disk 2, the bending moment M becomes smaller.

A shim 9a is sandwiched between inner rings of the single row deep groove bearings 5a and 5b, and the single row deep groove bearings 5a and 5b are fixed to the eccentric shaft 5e by a cap ring 6a and a bolt 7a such that the bearings 5a and 5b do not move in the axial direction. A thickness of the shim 9a is equal to a total thickness of the thrust gaps of the single row deep groove bearings 5a and 5b. Similarly, a shim 9b is sandwiched between inner rings of the single row deep groove bearings 5c and 5d, the single row deep groove bearings 5c and 5d are fitted over the eccentric shaft 5f, and the bearings 5c and 5d are fixed by a cap ring 6b and a bolt 7b such that they do not move in the axial direction. A thickness of the shim 9b is equal to a total thickness of the thrust gaps of the single row deep groove bearings 5c and 5d. The same function can be exhibited even if the shim is sandwiched between outer rings.

The drive shaft 4 shown in Fig. 3 is provided at its end closer to the revolution scroll member 1 with an eccentric shaft 4a, the single row deep groove bearings 4b and 4c are fitted over the eccentric shaft 4a, and the drive shaft 4 is mounted on the revolution shaft support hole 2b of the revolution disk 2 such that the drive shaft 4 can move in the axial direction. One single row deep groove bearing may be used instead of the single row deep groove bearings 4b and 4c. When the revolution scroll member 1 revolves, a centrifugal force P is applied to a barycenter of the revolution scroll member 1, and a bending moment M is generated in the revolution scroll member 1. To support the bending moment M, the revolution scroll member 1 is pivotally supported by two or more crankshafts 5 in the thrust direction and the radial direction while keeping rigidity, and the revolution scroll member 1 is held on the revolution support plate 14 to endure the bending moment M.

To hold the rigidity of the revolution scroll member 1 and to pivotally support the revolution scroll member 1, the outer rings of the single row deep groove bearings 5a and 5b shown in Fig. 5 are abutted against step of the revolution disk 2 such that the outer rings do not penetrate toward the revolution scroll member 1, the outer rings are mounted on the crankshaft support hole 2a, the outer rings are fixed to the revolution disk 2 by a cap ring 8a and a bolt 11a, and a pre-load is applied to a balls of the single row deep groove bearings 5a and 5b so that they do not move even slightly. Although the pre-load is applied to the single row deep groove bearings 5a and 5b, this is not necessary only if the eccentric shaft 5e can be rotatably mounted on the revolution disk 2 such that the eccentric shaft 5e does not move even slightly in the axial direction and a direction perpendicular to the axial direction. For example, a thrust bearing and a single row deep groove bearing may be combined. The single row deep groove bearings 5a and 5b are mounted in the crankshaft support hole 2a in a state in which the outer rings of the bearings 5a and 5b are abutted against the step of the revolution disk 2 formed on the side of the revolution lap support disk 1b. Alternatively, the single row deep groove bearings 5a and 5b may be mounted in the crankshaft support hole 2a such that the outer rings of the bearings 5a and 5b abutted against a step of the revolution disk 2 formed on the opposite side from the revolution lap support disk 1b and the bearings 5a and 5b are fitted into the revolution disk 2 so that the single row deep groove bearings 5a and 5b do not move even slightly toward the eccentric shaft 5e. The outer rings are fixed in the axial direction such that the single row deep groove bearings 5a and 5b do not move even slightly in the axial direction. Therefore, even if the revolution disk 2 is made of aluminum, the single row deep groove bearings 5a and 5b are not rotated at the contact surfaces of the outer rings, and no wear is generated.

The outer rings of the single row deep groove bearings 5c and 5d are abutted against the step of the revolution support plate 14 so that the outer rings do not penetrate toward the drive motor 10 and the outer rings are mounted to the crankshaft support hole 14a, the outer rings are fixed to the revolution support plate 14 by the cap ring 8b and the bolt 11b, a pre-load is applied to balls of the single row deep groove bearings 5c and 5d so that they do not move even slightly in the axial direction. Although the pre-load is applied to the single row deep groove bearings 5c and 5d, this is not necessary only if the eccentric shaft 5f can be rotatably mounted such that the eccentric shaft 5f does not move even slightly in the axial direction and a direction perpendicular to the axial direction. For example, a thrust bearing and a single row deep groove bearing may be combined. The single row deep groove bearings 5c and 5d are mounted in crankshaft support hole 2c in a state in which the outer rings of the bearings 5c and 5d are abutted against the step of the revolution support plate 14 formed on the side of the drive motor 10. Alternatively, the single row deep groove bearings 5a and 5b may be mounted in the crankshaft support hole 14a such that the outer rings of the bearings abutted against the step of the revolution support plate 14 formed on the opposite side from the drive motor 10 and the bearings are fitted into the revolution support plate 14 so that the single row deep groove bearings 5a and 5b do not move even slightly toward the eccentric shaft 5f. The outer rings are fixed in the axial direction such that the single row deep groove bearings 5c and 5d do not move even slightly in the axial direction. Therefore, even if the revolution disk 2 is made of aluminum, the single row deep groove bearings are not rotated at the contact surfaces of the outer rings, and no wear is generated.

The inner ring of the single row deep groove bearing 12 is fitted over a center of the drive shaft 4 shown in Fig. 3, and the inner ring is fixed to the shaft C shaped detent ring 19. The outer ring of the single row deep groove bearing 12 is abutted against the step of the revolution support plate 14 so that the outer ring does not penetrate toward the revolution disk 2, the outer ring is mounted to the hole, and the outer ring is fixed by a cap ring 15 and a bolt 16 such that the outer ring does not move in the axial direction. The balancer weight 21, the drive motor 10 and the balancer weight 22 are fitted over the drive shaft 4 such that they do not move in the axial direction or rotate around the drive shaft 4.

To enhance the thrust rigidity of the drive shaft 4 and to reduce the noise, a single row deep groove bearing 13 is abutted against a step of the balance protection cover 17 so that the single row deep groove bearing 13 does not penetrate toward the drive motor 10 and the single row deep groove bearing 13 is mounted to a hold, a bellevile spring 18 is provided between this step and the outer ring of the single row deep groove bearing 13, the drive shaft 4 is pulled toward the balance protection cover 17, and a pre-load is applied to balls of the single row deep groove bearing 12 and the single row deep groove bearing 13.

The single row deep groove bearings 5a and 5b and the single row deep groove bearings 5c and 5d are respectively fitted over the eccentric shaft 5e and the eccentric shaft 5f on the opposite ends of the crankshafts 5, and surface pressures are applied to rolling elements and races of the single row deep groove bearings 5a and 5b and the single row deep groove bearings 5c and 5d. With this configuration, the revolution scroll member 1 is pivotally supported in the thrust direction and the revolution disk while keeping rigidity so that the bending moment M generated in the revolution scroll member 1 can be handled. With this configuration, it is possible to prevent the revolution scroll member 1 made of synthetic resin from being deformed, and to prevent the outer rings of the single row deep groove bearings 5a and 5b from being worn.

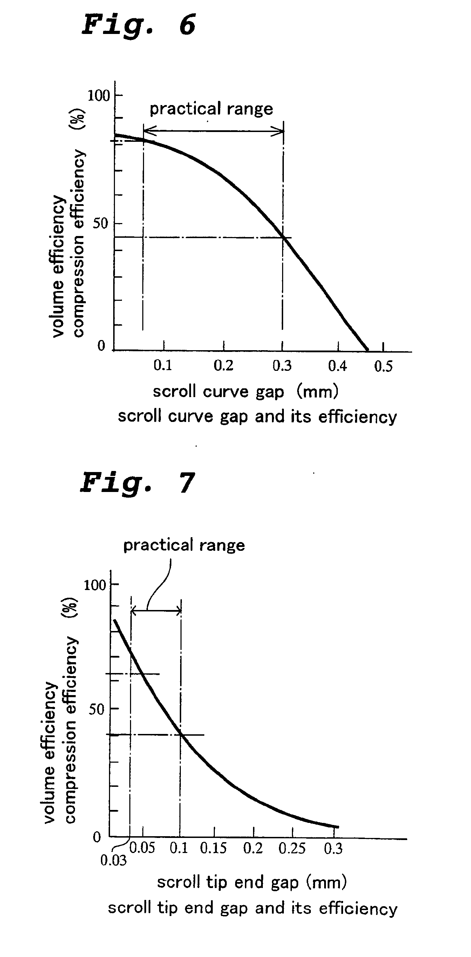

Next, the gap of the scroll will be explained. Fig. 6 shows a relation between a scroll curve gap and its efficiency of an embodiment of the invention, and Fig. 7 shows the relation between the scroll tip end gap and its efficiency of the embodiment of the invention.

In the scroll compressor shown in Fig. 3, in order to eliminate the friction resistance caused when the revolution scroll member 1 revolves and to reduce the friction loss (e.g., power loss), and in order eliminate the lap wear and to elongate the lifetime, a predetermined gap is provided between meshing portions of the revolution scroll member 1 and the fixed scroll member 3 in a non-contact manner. That is, if the drive shaft 4 is rotated by the drive motor 10, the revolution disk 2 tries to rotate around the eccentric shaft 4a while revolving, but the revolution disk 2 is prevented from rotating by two or more crankshafts 5, and the revolution disk 2 and the revolution scroll member 1 revolve. A scroll curve gap is provided in the direction of the normal of the arc in a state in which the revolution scroll lap 1a and the fixed scroll lap 3a are meshed with each other, and a scroll tip end gap is provided between the revolution scroll lap 1a and a lap tip end of the fixed scroll lap 3a.

Sizes of the gaps are determinedwhile taking, into account, balance between the efficiency curve based on experimental values shown in Figs. 6 and 7 and various properties of synthetic resin (e.g., thermal deformation property, molding property, cost and the like). In this embodiment, a practical range of the scroll curve gap is 0.05 to 0.3mm, and a practical range of the scroll tip end gap is 0.03 to 0.1mm. That is, the smaller gap has better efficiency, but since the synthetic resin may be formed by injection molding, the above-described lower limits are determined based on the maintenance of the non-contact manner in which change with time of the synthetic resin is taken into account. If the gap becomes excessively large, the leakage amount is increased and the compression efficiency is deteriorated. Thus, the above-described upper limits are determined.

That is, the fixed scroll member and the revolution scroll member are meshed with each other with the predetermined gap therebetween in the non-contact manner in which no friction loss and no wear are generated, the predetermined gap between both the scrolls is set to the practical value in which the gap can be maintained for a long time, and the power consumption of the air compressor can be reduced and the lifetime thereof can be increased.

Next, materials of the revolution scroll member and the like in the embodiment 3 will be explained. In the air compressor of this embodiment shown in Fig. 3, the revolution scroll member 1 (i.e., revolution scroll lap 1a and revolution lap support disk 1b) is made of synthetic resin such as PPS, liquid crystal polymer, ABS or the like so as to reduce the centrifugal force P. When the revolution scroll member 1 and/or fixed scroll member 3 is made of synthetic resin into which bubbles are mixed, it is effective if the entire air compressor is reduced in weight, in addition to the effects that the bending moment M is further reduced, the deformation of the revolution scroll member is further prevented.

Next, the fastening structure between the revolution scroll member 1 and the revolution disk 2 will be explained. In the fastening structure of the embodiment 3 shown in Fig. 3, the revolution disk 2 is made of aluminum alloy, iron alloy or titanium alloy. The revolution disk 2 is fastened to the side of the revolution lap support disk 1b opposite from the revolution scroll lap 1a by means of a plurality of bolts 20 which are inserted into screw holes of the revolution disk 2 from the side of the revolution scroll lap 1a.

According to the above structure, in the separated revolution scroll member 1 and the revolution disk 2, the metal revolution disk 2 directly receives the driving force, the synthetic resin revolution scroll member 1 receives the driving force at the plurality of bolts 20 in a dispersed manner, the deformation of the revolution scroll member 1 caused by the driving force can be suppressed, the power consumption of the air compressor can be reduced, and its lifetime can be increased.

The structure of the air compressor has the following features: (1) since the revolution scroll member 1 is made of synthetic resin, the bending moment M caused by the centrifugal force P of the revolution scroll member can be reduced; (2) since the revolution scroll member 1, the fixed scroll member 3 and the first casing 3d are made of synthetic resin, the entire apparatus can be reduced in weight, and since they are made of synthetic resin into which bubbles are mixed, the apparatus can further be reduced in weight; (3) since the revolution scroll member 1 and the revolution disk 2 are separated from each other, the metal revolution disk 2 can directly receive the driving force, and since the revolution scroll member 1 receives the driving force in the dispersed manner, the synthetic resin revolution scroll member 1 can be prevented from being deformed by the driving force; and (4) the synthetic resin revolution scroll member 1 does not have a portion where a sink is generated unlike the conventional bearing boss, and the compression efficiency is not deteriorated by dead volume.

The structure of the air compressor further has the following features: (5) the revolution shaft support hole 2b and the crankshaft support hole 2a into which the eccentric shaft 4a and the eccentric shaft 5e are inserted are integrally molded on the metal revolution disk 2 as an integral bearing reinforcing structure, the revolution scroll member 1 is not thermally deformed unlike the conventional divided type bearing reinforcing structure by metal insert, and wear and mechanical loss caused by lap contact are prevented; (6) both the holes, i.e., the revolution shaft support hole 2b and the crankshaft support hole 2a can be precisely be formed in parallel to each other by mechanical working, and the lap contact can be prevented; (7) since the fixed scroll member 3 and the first casing 3d are integrally formed together and the revolution support plate 14 and the second casing 14d are also integrally formed together, the number of parts can be reduced, assembling accumulated error in the axial direction can be reduced, and the size management of the scroll tip end gap G can be facilitated; (8) the metal revolution disk 2 is integrally provided with the revolution shaft support hole 2b and the crankshaft support hole 2a, and since the eccentric shaft 4a and the eccentric shaft 5e are pivotally supported by the revolution shaft support hole 2b and the crankshaft support hole 2a through the single row deep groove bearings 4b and 4c and the single row deep groove bearings 5a and 5b, the wear resistance of the bearing portion is enhanced, and its lifetime can be increased. Further, in order to apply the pre-load to the single row deep groove bearings 5a and 5b and the single row deep groove bearings 5c and 5d, the shims 9a and 9b are sandwiched between the inner rings, and the outer rings are fixed by the cap ring 6b and the bolt 7b. With this structure, the revolution scroll member 1 can endure the bending moment M while keeping rigidity, and the deformation of the revolution scroll member 1 can be suppressed.

That is, according to the embodiment 1, the scroll type air compressor is utilized for supplying air pole of the fuel cell having the fuel pole and the air pole using the hydrogen ion conductive polyelectrolyte film. In the scroll type air compressor, the fixed scroll member and the revolution scroll member are made of light synthetic resin, and the fixed scroll lap and the revolution scroll lap are not in contact with each other. In order to maintain this non-contact state for a long time, the revolution rigidity of the revolution scroll member is enhanced, the revolution scroll member is pulled toward the rotation-preventing device, the pre-load is applied to the rotation-preventing device, and the pre-load is applied to the single row deep groove bearings of the eccentric shafts on the opposite ends of the crankshaft.

If the scroll type air compressor of the embodiment is used, it is possible to provide a payable electric power generator in which power consumption of the air compressor as the accessory machine can be reduced, its lifetime can be increased, and electricity loss is small. In other words, it is possible to provide an electric power generator using a practical air compressor in which thermal deformation of the revolution scroll member is suppressed, the non-contact state of the lap gap is maintained for a long time, and wear and mechanical loss caused by lap contact are prevented.

### (Embodiment 4)

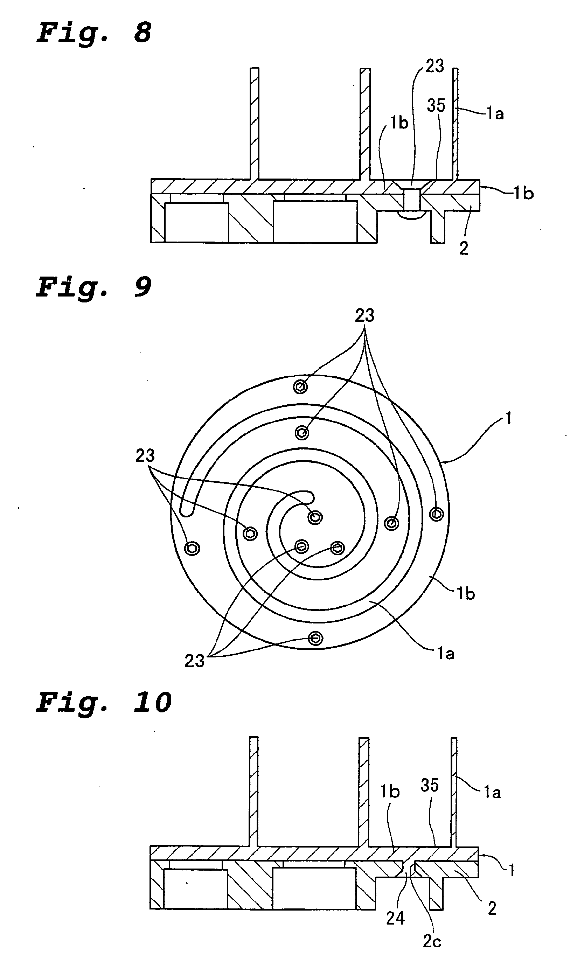

Next, a fastening structure between the revolution scroll member and the revolution disk according to the embodiment 4 will be explained with reference to Figs. 8 and 9. Fig. 8 is a sectional view showing the fastening state between the revolution scroll member and the revolution disk of the embodiment 4. In the fastening structure of the embodiment 4, metal or synthetic resin rivets 23 are used instead of the bolts 20 of the embodiment 3.

Fig. 9 is a plan view of the fastening structure shown in Fig. 8, and shows a layout of the rivets 23 as viewed from above of the revolution scroll member 1. That is, the revolution scroll member 1 (revolution lap support disk 1b of the revolution scroll member 1) and the revolution disk 2 are fastened to each other by swaging using the plurality of rivets 23 which are appropriately arranged in good balance.

According to the fastening structure of the embodiment 4, the driving force applied to the revolution scroll member 1 is dispersed, and the deformation of the revolution scroll member caused by the driving force can be suppressed. In the case of the fastening structure using the rivets according to the embodiment 4, since the top surface of the rivet is flat and there is no recess unlike the bolt 20 of the embodiment 3, the top surface of the rivet can be flush with the bottom surface 35 of the revolution lap support disk 1b and a substantially flat surface can be obtained. Therefore, the dead volume can be reduced, and deterioration of the compressing efficiency can be avoided correspondingly.

Although it is not illustrated in the drawing, a synthetic resin rodmay be used instead of the rivet. That is, the revolution lap support disk 1b and the revolution disk 2 may be connected to each other in such a manner that synthetic resin rods are respectively embedded into the holes formed in the revolution lap support disk 1b and the revolution disk 2, and the synthetic resin are allowed to be melted to fasten the revolution lap support disk 1b and the revolution disk 2. With this structure also, deformation can be prevented by dispersing the driving force, and deterioration in compression efficiency by the dead volume can be avoided.

### (Embodiment 5)

Next, a fastening structure of the embodiment 5 will be explained with reference to the sectional view of Fig. 10. Fig. 10 shows the fastening structure between the revolution scroll member and the revolution disk. That is, a projection 24 shown in Fig. 10 is provided on the revolution lap support disk 1b of the synthetic resin revolution scroll member 1, and the projection 24 is inserted into a mounting hole 2c formed in the revolution disk 2, a tip end of the projection 24 is heated and melted, thereby fastening the revolution scroll member 1 (revolution lap support disk 1b of the revolution scroll member 1) and the revolution disk 2 to each other.

According to the fastening structure of the embodiment 5, the driving force applied to the revolution scroll member 1 is dispersed, and the deformation of the revolution scroll member caused by the driving force is suppressed. Since the projection 24 does not have a head unlike the bolt 20 or rivet 23, a bottom surface 35 of the revolution lap support disk 1b does not project at all. Thus, there is no dead volume, and deterioration in compressing efficiency is avoided. According to the fastening structure of the embodiment 5, the head of the loose bolt 20 or rivet 23 does not come into contact with the fixed scroll lap 3a, and there is effect that the bottom surface 35 and the fixed scroll lap 3a can slide with respect to each other in a completely non-contact manner.

It was shown by experiment that influence on compression of a recess in a head in the fastening structure using the bolt 20 or rivet 23 was not practically serious because the efficiency was deteriorated only by 1 to 2% under the pressure of about 10kPa.

### (Embodiment 6)

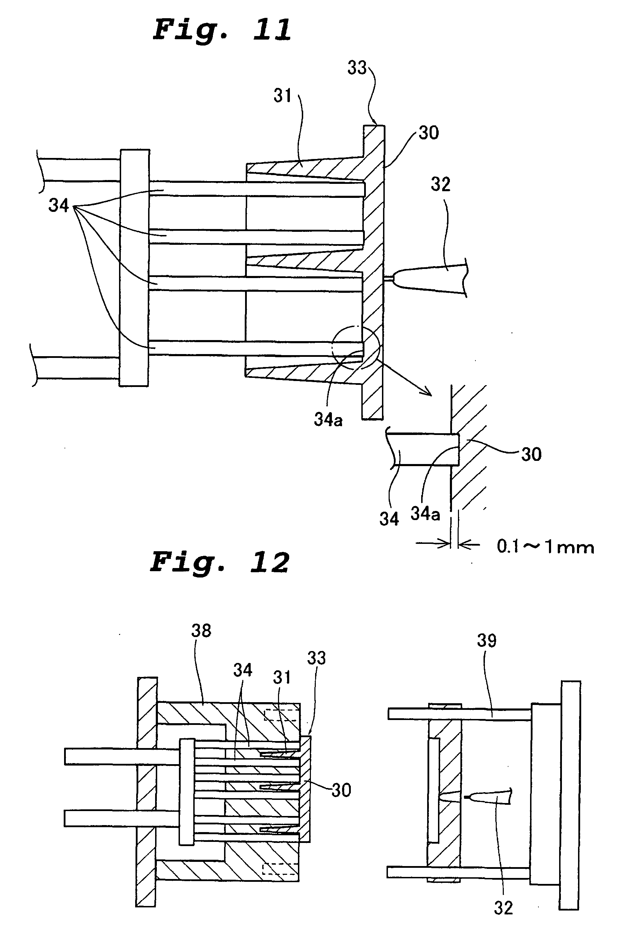

Next, a structure in which a scroll member such as the revolution scroll member 1 and the fixed scroll member 3 are formed by injection molding will be explained. Fig. 11 is a sectional view showing an injection molding structure of the embodiment.

According to the embodiment 6, the revolution scroll member 1 and the fixed scroll member 3 are formed by injection molding using synthetic resin. A metal mold is provided with one point injection gate 32 at a central portion of a surface of the lap support disk 30 opposite from its surface on which a scroll lap 31 stands. The heated fluid resin is injected from the injection gate 32 into the metal mold.

The lap support disk 30 corresponds to the revolution lap support disk 1b and the fixed lap support disk 3b, the scroll lap 31 corresponds to the revolution scroll lap 1a and the fixed scroll lap 3a, and the scroll member 33 corresponds to the revolution scroll member 1 and the fixed scroll member 3.

According to the embodiment 6, metal mold is injected from the one point gate 32 to form the lap support disk 30. If flows of a plurality of resins collide against each other, a weld is generated. However, according to this embodiment, the possibility that the welds are generated is small as compared with a case in which multiple gates are used, and reduction in tensile strength at the weld surface can be prevented. Especially, the centrifugal force P and bending moment M are repeatedly applied to the revolution scroll member for a long time continuously due to the revolution, but since the molten resin is injected from the one point gate 32 in this embodiment, it is possible to prevent the revolution scroll member from being destroyed at the weld. That is, according to the method of this embodiment, a scroll member in which no deformation or no destruction is generated can be formed, the power consumption of the air compressor can be reduced and its lifetime can be increased.

In order to prevent the compressed gas from leaking, it is necessary that the flatness of the bottom surface 35 of the scroll member 33 is 0.03mm or less. For this purpose, it is necessary to prevent the sink from generating at the time of injection molding. In the case of the revolution scroll member 1 shown in Fig. 3, the revolution disk 2 made of material different from that of the revolution lap support disk 1b is provided on the surface of the revolution lap support disk 1b on the opposite side from the revolution scroll lap 1a, and the revolution scroll member 1 and the revolution disk 2 are connected to each other using the fastening member such as the bolt 20. Thus, it is unnecessary to provide the crankshaft support hole 2a and the revolution shaft support hole 2b on the revolution lap support disk 1b which is made of synthetic resin. Therefore, since there are no bumps and dips formed by the crankshaft support hole 2a and the revolution shaft support hole 2b, it is possible to prevent the resin from being deformed, and to suppress the sink to the minimum. That is, the deterioration in compressing efficiency caused by the recess (i.e., dead volume) generated in the sink can be prevented, and the efficiency of the air compressor can beenhanced. Although the one point injection gate is preferable, a plurality of injection gates capable of suppressing the generation of welds may be used.

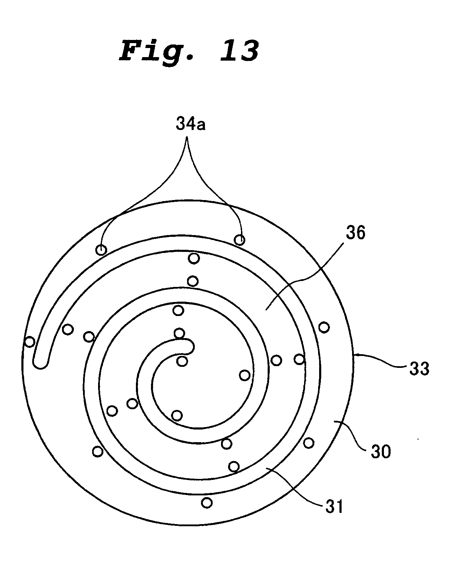

Next, a method for taking out a product from the metal mold after the scroll members of the revolution scroll member 1 and the fixed scroll member 3 are injection molded will be explained. Fig. 12 is a sectional view showing the taking out structure of the embodiment of the invention, and Fig. 13 is a plan view showing the product after the taken out structure shown in Fig. 12.

According to the taking out method of this embodiment, synthetic resin is injection molded, and after the resin is solidified in the metal mold, the solidified resin product (scroll member) is taken out from the cavity of the metal mold. The bottom surface 35 of the lap support disk 30 is pushed by the ejector pin 34 from the scroll lap 31, thereby taking out the resin product ( scroll member). The metal mold is provided at its portion closer to the metal mold cavity 38 with a space for the scroll lap 31, and is provided at its portion closer to the metal mold core 39 with the injection gate 32. The molten resin is injection molded in the metal mold, and it is cooled until the synthetic resin is solidified. Then, the scroll member is pushed out from the metal mold cavity 38 by the ejector pin 34.

The ejector pins 34 are disposed such that a pin hole 34a is located in the vicinity of a root of the scroll lap 31. Since the plurality of ejector pins 34 are provided, it is possible to push the scroll lap 31 by uniform force, and deformation of the lap support disk 30 can be reduced.

In order to injection mold the synthetic resin, to solidify the same in the metal mold, and to enhance the shaping precision, a cooling circuit is provided in the metal mold in some cases. To cool the lap portion, a cooling water circuit for cooling the lap gap 36 is disposed in some cases, but to secure this cooling water circuit, it is preferable to dispose the cooling water circuit in the vicinity of the root of the standing scroll lap 31.

With this structure for taking the product of this embodiment from the metal mold, deformation of the scroll member when it is taken out from the metal mold is suppressed, the power consumption of the air compressor can be reduced and its lifetime can be increased.

Even if the ejector pin 34 is not disposed in the vicinity of the root of the scroll lap 31, deformation thereof may be reduced due to the synthetic resin or lap height in some cases. In that case, since the pushing mark of the ejector pin 34 remains on the bottom surface 35, the mark of the pin hole 34a is recessed so that it does not come into contact with the mating lap tip end. The depth of the recess is 0.1 to 1mm. It can be considered that the compresses air is leaked from the recess and the pressure is not increased, but it is shown by experiment that air is practically compressed without problem because the efficiency was deteriorated only by 1 to 2% under the pressure of about 10kPa.

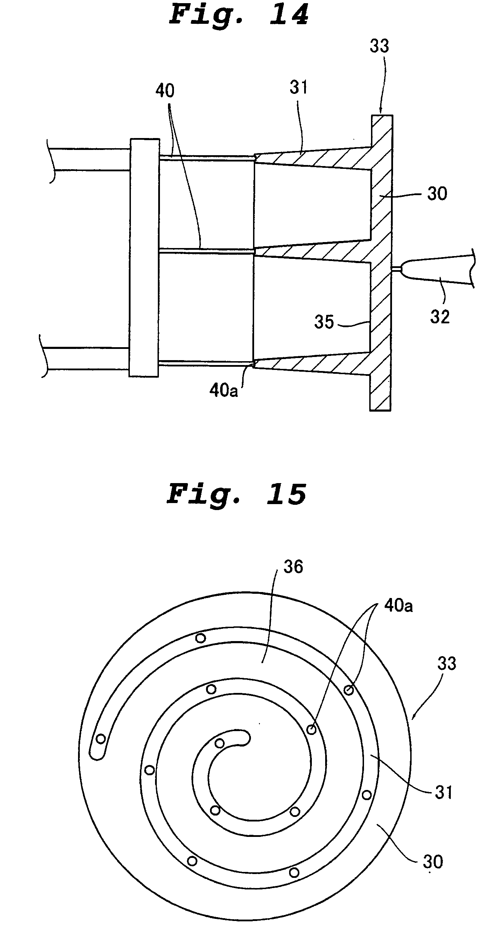

A method shown in Figs. 14 and 15 will be explained next. A plurality of ejector pins 40 are disposed on the tip end of the scroll lap 31, and are arranged over the entire periphery of the scroll lap 31. A width of the lap tip end is usually 2 to 5mm, and each of the ejector pins 40 has smaller diameter than this width. The mark of the ejector pin 40 on the lap tip end generated by pushing or extrusion is recessed so that the mark does not project.

Fig. 15 is a plan view showing a product after it is taken out shown in Fig. 14, and shows the layout on the lap tip end of the pin holes 40a as marks of the ejector pins 40. The depth of the recess of the pin hole 40a is 0.1 to 1mm. It can be considered that the compresses air is leaked from the recess and the pressure is not increased, but it is shown by experiment that air is practically compressed without problem because the efficiency was deteriorated only by 1 to 2% under the pressure of about 10kPa.

### Industrial Applicability

According to the present invention, the non-contact manner between the fixed scroll portion and the revolution scroll portion is maintained for a long time. With this, the power consumption of the scroll type air compressor can be reduced, and the vibration of the air compressor can be reduced. When the number of rotations is about 1,200rpm (although it varies depending upon the amount of electricity to be generated), the operation lifetime can be increased to 40,000 hours, and it is possible to provide a payable electric power generator having small electricity loss (electric power generator using polyelectrolyte fuel cell for example) using an air compressor for supplying air. That is, there is effect that a practical electric power generator can be provided.

## Claims

1. An electric power generator using a scroll compressor as an air compressor for supplying oxygen to a fuel cell, wherein in a revolution scroll member constituting said scroll compressor, a revolution scroll lap stands on one of surfaces of a revolution lap support disk, a revolution disk is connected to the other surface of said revolution lap support disk, said revolution disk is formed at its center with a revolution shaft support hole into which an eccentric shaft on an end of a drive shaft is to be inserted, an outer periphery of said revolution shaft support hole of said revolution disk is formed with a plurality of crankshaft support holes into which eccentric shafts of crankshafts which restrain rotation of said revolution scroll member are to be inserted, said revolution lap support disk and said revolution scroll lap are integrally formed of synthetic resin, said revolution disk is made of metal, said revolution shaft support hole and said crankshaft support hole are integrally formed together.

2. An electric power generator using a scroll compressor as an air compressor for supplying oxygen to a fuel cell, wherein said scroll compressor comprises a fixed scroll member having a fixed scroll lap standing on one of surfaces of a fixed lap support disk, a revolution scroll member having a revolution scroll lap standing on one surface of a revolution lap support disk, a drive shaft for transmitting a driving force to said revolution scroll member, a crankshaft for restraining rotation of said revolution scroll member, and a revolution support plate for holding said drive shaft through a bearing and for holding one of eccentric shafts of said crankshaft through said bearing, said fixed scroll member and a first casing which covers an outer periphery of said fixed scroll lap are integrally formed of synthetic resin,
said revolution support plate and a second casing connected to said first casing are integrally formed of metal, a revolution disk made of metal is connected to the other surface of said revolution lap support disk, said revolution disk pivotally supports an eccentric shaft on an end of said drive shaft, and pivotally supports the other eccentric shaft of said crankshaft.

3. The electric power generator according to claim 2, wherein a plurality of ball bearings are provided on eccentric shafts on opposite ends of said crankshaft, said ball bearings are assembled such that surface pressures are previously applied between their rolling elements and races.

4. The electric power generator according to claim 2 or 3, wherein a gap is provided between a tip end of said fixed scroll lap and said revolution lap support disk, and a gap is provided between a tip end of said revolution scroll lap and said fixed lap support disk.

5. The electric power generator according to claim 4, wherein a size of said gap is 0.03 to 0.1mm.

6. The electric power generator according to claim 2 or 3, wherein a gap is provided between said fixed scroll lap and said revolution scroll lap.

7. The electric power generator according to claim 6, wherein a size of said gap is 0.05 to 0.3mm.

8. The electric power generator according to any one of claims 1 to 3, wherein said revolution lap support disk and said revolution disk are connected to each other by fasting a bolt from said revolution lap support disk.

9. The electric power generator according to any one of claims 1 to 3, wherein said revolution lap support disk and said revolution disk are connected to each other by fasting a rivet from said revolution lap support disk.

10. The electric power generator according to any one of claims 1 to 3, wherein said revolution lap support disk and said revolution disk are connected to each other by melting and deforming a portion of a projection provided on said revolution lap support disk.

11. The electric power generator according to any one of claims 1 to 3, wherein said revolution lap support disk and said revolution disk are connected to each other by embedding a synthetic resin into holes formed in said revolution lap support disk and said revolution disk and by melting and deforming the synthetic resin.

12. The electric power generator according to any one of claims 1 to 3, wherein said revolution scroll member or said fixed scroll member is formed by injection molding.
